# EUROPÄISCHE PATENTSCHRIFT

(11) **EP 1 478 821 B1**
(45) Veröffentlichungstag und Bekanntmachung des Hinweises auf die Patenterteilung: **01.03.2006**
(21) Anmeldenummer: 02779197.9
(22) Anmeldetag: 06.11.2002
(51) Int. Cl.: E05F 15/16

(54) **ANTRIEBSVORRICHTUNG**
DRIVE DEVICE
DISPOSITIF DE COMMANDE

(30) Priorität: 19.02.2002 DE 10207004
(43) Veröffentlichungstag der Anmeldung: 24.11.2004
(73) Patentinhaber: ROBERT BOSCH GMBH, 70442 Stuttgart (DE)
(72) Erfinder: BUSS, Heiko, 77815 Buehl (DE); MAERKLE, Jens, 77815 Buehl (DE)
(86) Internationale Anmeldenummer: PCT/DE2002/004101
(87) Internationale Veröffentlichungsnummer: WO 2003/071073

(56) Entgegenhaltungen:
- DE-A- 4 233 156
- DE-A- 10 019 512
- DE-A- 10 020 018
- US-A- 5 245 258
- US-A- 5 528 093
- US-A- 5 791 204
- US-A- 5 984 695
- US-A- 6 114 820
- US-B1- 6 191 512
- US-B1- 6 317 332

## Beschreibung

### Stand der Technik

Die Erfindung betrifft eine Antriebsvorrichtung, insbesondere zum Heben und Senken von Scheiben im Kraftfahrzeug, nach der Gattung des unabhängigen Anspruchs.

Es sind schon zahlreiche Antriebsvorrichtungen zu diesem Zwecke bekannt, beispielsweise aus der DE 200 04 338 A1. Die in dieser Schrift gezeigte Antriebsvorrichtung weist einen Elektromotor mit einem Getriebegehäuse auf, in das ein Plug-In-Modul einschiebbar ist. Das Plug-In-Modul weist eine Stirnfläche mit einem Stecker für die Motorstromversorgung und eine Leiterplatte auf, auf der elektronische Bauelemente angeordnet sind. Auf einem schmalen Finger der Leiterplatte ist ein SMD-Hallsensor angeordnet, der in montiertem Zustand mit einem Ringmagneten der Ankerwelle wechselwirkt. Zur exakten Positionierung des Hallsensors dient hier lediglich eine mit einer Dichtung versehene Führung an der Stirnseite des Plug-In-Moduls, weit weg von der Ankerwelle.

Wird nun zur sicheren Positionierung des Hallsensors im Getriebegehäuse eine Führung für den Leiterplattenfinger angeformt - um beispielsweise Abweichungen vom Soll-Abstand des Hallsensors bei der Montage oder bei Fahrzeugerschütterungen zu vermeiden - so stört diese Führung bei der Verwendung andersartiger Leiterplatten. Für andere Anwendungen beispielsweise mit auf einem ASIC integrierte Hallsensoren ist es gewünscht, dass eine breitere Leiterplatte mit einem anderen Abstand zur Ankerwelle in dasselbe Getriebegehäuse eingeschoben werden kann. Dabei kommt es zu einer Kollision dieser zweiten Leiterplatte mit dem im Getriebegehäuse angeformten Führungen für die erste Leiterplatte, wodurch die Verwendung desselben Getriebegehäuses für verschiedene Leiterplatten nicht möglich ist.

### Vorteile der Erfindung

Die erfindungsgemäße Antriebsvorrichtung mit dem Merkmal des Hauptanspruchs hat den Vorteil, dass universelle Getriebe- und Elektronikgehäuse geschaffen sind, die eine Bestückung mit unterschiedlich geformten Leiterplatten ermöglichen. Eine dadurch mögliche modulare Produktionstechnik hat enorme Vorteile. Die komplexeren größeren Gehäuseteile können in sehr hoher Stückzahl produziert werden. Die dazugehörigen einfacheren Bauteile, wie beispielsweise der Elektronikgehäusedeckel, kann sehr einfach an verschiedene Leiterplatten angepaßt werden. Insbesondere erlaubt die erfindungsgemäße Ausführung der unterschiedlichen Führungen eine sichere Positionierung verschiedener Leiterplatten mit unterschiedlichen Abständen zur Ankerwelle.

Durch die in den Unteransprüchen ausgeführten Merkmale sind vorteilhafteweiterbildungen der erfindungsgemäßen Antriebsvorrichtung möglich. Werden die Führungen zumindest teilweise als Anschläge im Getriebegehäuse ausgebildet, an denen die Leiterplatte mit ihrer der Ankerwelle zu- und/oder abgewandten Seite anliegt, wird dadurch der Abstand des Hallsensors zum Magneten der Ankerwelle eindeutig festgelegt. Dies erlaubt eine präzise Positionserfassung mit geringen Störsignalen.

Werden die Führungen im Getriebegehäuse derart angeordnet, dass diese mit den axialen Randbereichen der Leiterplatte wechselwirken, können unterschiedlich breite Leiterplatten an axial unterschiedlichen Randbereichen geführt werden, wodurch eine Kollision der einen Leiterplatte mit den Führungen der anderen Leiterplatte vermieden werden kann.

Besonders günstig ist es, eine Führung als Steg am Elektronikgehäuse anzuformen, auf der die Leiterplatte aufliegt, da dieser Steg in Verbindung mit der Getriebegehäusewand die Funktion eines Anschlags zur Festlegung eines maximalen Abstands der Leiterplatte von der Ankerwelle übernimmt, ohne dass für diese Leiterplatte ein solcher Anschlag am Getriebegehäuse angeformt werden muß. Daher kollidiert diese als Steg ausgeführte Führung nicht mit dem am Getriebegehäuse angeordneten Führungen, die mit den axialen Randbereichen der Leiterplatte wechselwirken. Der Steg liegt insbesondere im axial mittleren Bereich an der Leiterplatte an, und stützt diese gegenüber der Getriebegehäusewand ab.

Fertigungstechnisch ist es besonders einfach, den Steg einstückig mit dem Elektronikgehäuse auszuformen, beispielsweise mittels des Spritzgußverfahrens. Noch günstiger ist es das Elektronikgehäuse stets identisch auszuführen und lediglich an dessen Deckel einen Steg entsprechend der gewünschten Leiterplatte anzuformen.

Wird die Leiterplatte fest mit dem Steg verbunden, beispielsweise mit einer Clip- oder Rastverbindung, erleichtert dies die Montage des Elektronikgehäuses, da eine Verschiebung der Leiterplatte gegenüber dem Steg unterbunden wird. Außerdem erlaubt eine solche Verbindung zwischen Leiterplatte und Steg eine separate Ausführung des Stegs, losgelöst vom Elektronikgehäuse.

Von Vorteil ist es, die Öffnung im Getriebegehäuse derart auszuformen, dass sich der Steg beim Einführen und in montiertem Zustand auf der einen Seite am Getriebegehäuse abstützen kann, und andererseits die Leiterplatte gegen einen Anschlag preßt, der den minimalen Abstand der Leiterplatte zur Ankerwelle vorgibt.

Ragt der Steg in Längsrichtung über die Leiterplatte hinaus, so kann sich dieses freie Ende des Stegs mit seiner Stirnseite an einer weiteren Führung im Getriebegehäuse abstützen. Die kürzere Ausführung des Leiterplattenfingers erlaubt eine effektivere Materialausnutzung bei der Leiterplattenherstellung. Ist das Elektronikgehäuse als separates Gehäuse ausgebildet, kann dieses in einfacher Weise als Einschubmodul mit dem Getriebegehäuse verbunden werden. Dabei weist das Elektronikgehäuse nur eine kleine Öffnung auf, aus der die unterschiedlichen Leiterplatten ragen. Diese relativ kleine Öffnung zwischen Elektronik- und Getriebegehäuse kann relativ einfach und wirkungsvoll gegenüber Wasser und Schmutz abgedichtet werden.

Des Weiteren können Führungen auch an einen Bürstenhalter angeformt sein, der als näherungsweise ringförmiges Bauteil axial zur Ankerwelle montierbar ist. Da der Bürstenhalter in unmittelbarer räumlicher Nähe zum Magneten der Ankerwelle liegt, gewähren diese Führungen ebenfalls eine zuverlässige räumliche Fixierung des Hallsensors gegenüber dem Ringmagneten.

Fertigungstechnisch kann es von Vorteil sein die Führungen als Nuten im Getriebegehäuse oder im Bürstenhalter auszuführen, in die die axialen Randbereiche der Leiterplatte eingeschoben werden.

Die Kompatibilität des Getriebe- und Elektronikgehäuses zu den verschiedenen Leiterplatten, erlaubt sowohl die Verwendung von SMD-Hallsensoren mit relativ geringem Leiterplattenflächenbedarf, als auch Hallsensoren, die in einem ASIC integriert sind und mehr Bauraum auf der Leiterplatte benötigen. Dadurch ist die Konzeption der Antriebsvorrichtung unabhängig von zukünftigen Elektronikentwicklungen auf diesem Gebiet.

Durch die parallele Anordnung der Leiterplatte zur Ankerwelle kann der Hallsensor direkt mit oder ohne ASIC, teilweise mittels vollautomatischen SMD-Verfahren auf der Leiterplatte befestigt werden, ohne dass eine besondere Halterung für die Hallsensoren notwendig ist.

Ist auf der Ankerwelle eine Schnecke angeformt, die ein Schneckengetriebe mit einem Abtriebsritzel antreibt, so ist dadurch ein kompakter Verstellantrieb mit exakter Positionserfassung geschaffen, wie er z. B. für Fensterheber im Kraftfahrzeug Verwendung findet.

### Zeichnungen

Ausführungsbeispiele der Erfindung sind in den Zeichnungen dargestellt und in der nachfolgenden Beschreibung näher erläutert. Es zeigen
Fig. 1a eine erfindungsgemäße Antriebsvorrichtung in schematischer Darstellung,
Fig. 1b ein Elektronik-Einschubmodul für die Antriebsvorrichtung nach Fig. 1a,
Fig. 1c ein weiteres Elektronik-Einschubmodul mit einer unterschiedlichen Leiterplatte,
Fig. 1d und 1e zeigen zwei Schnitte durch die Einschubmodule gemäß der Linie d - d und e - e,
Fig. 2a und 2b zwei Teilschnitte gemäß der Linie II - II der beiden unterschiedlichen eingefügten Leitplatten nach Fig. 1b und 1c und
Fig. 3a und 3b zwei Schnitte der beiden eingesetzten Einschubmodule gemäß der Linie III - III.

### Beschreibung der Ausführungsbeispiele

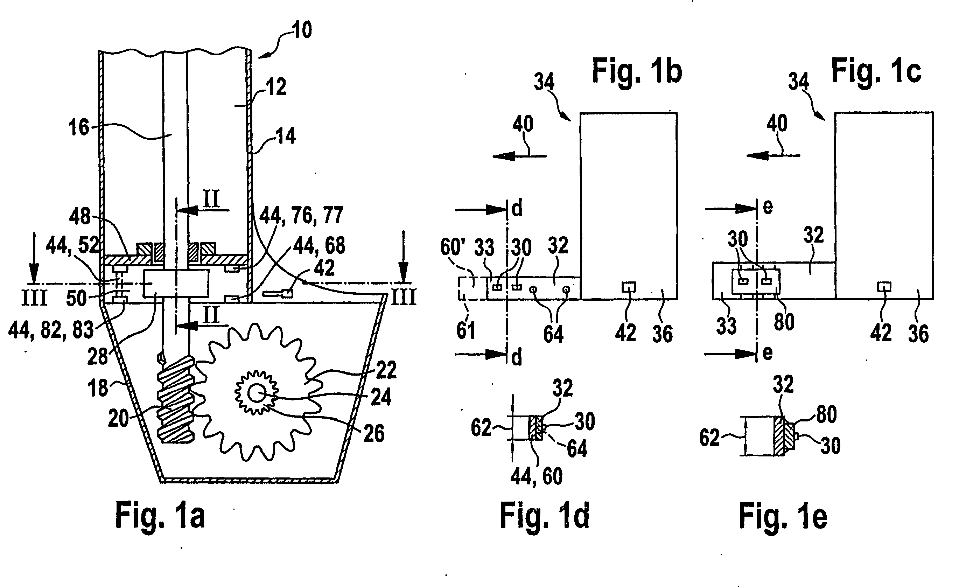

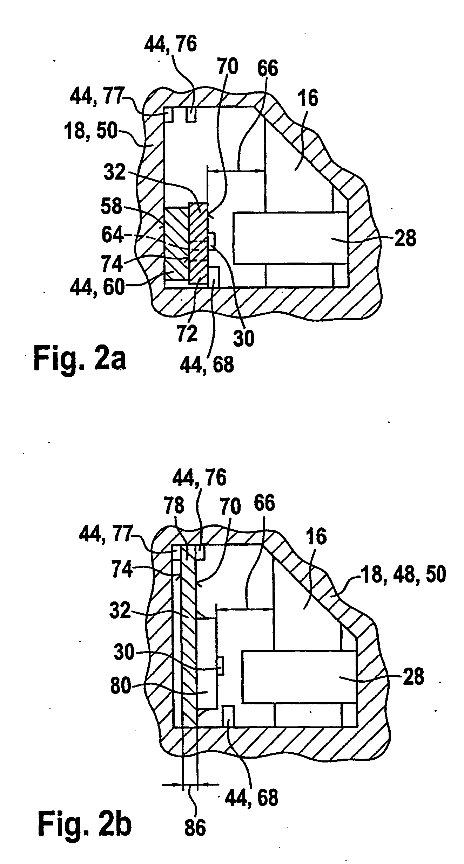

In Fig. 1a ist eine Antriebsvorrichtung 10 für einen Fensterheber dargestellt, der einen Elektromotor 12 mit einem Polgehäuse 14 aufweist, aus dem eine Ankerwelle 16 in ein Getriebegehäuse 18 ragt. Auf der Ankerwelle 16 ist eine Schnecke 20 angeordnet, die mit einem Abtriebsrad 22 kämmt und die Kraft über ein auf dessen Achse 24 gelagertes Abtriebsritzel 26 an eine nicht näher dargestellte Fensterhebermechanik weiterleitet. Zur Positionserfassung eines verstellbaren Teils ist auf der Ankerwelle 16 im Bereich des Getriebegehäuses 18 ein Ringmagnet 28 angeordnet, der mit Hallsensoren 30 wechselwirkt, die auf einer Leiterplatte 32 eines Elektronik-Einschubmoduls 34 angeordnet sind. Fig. 1b zeigt ein solches Einschubmodul 34, das als separates Elektronikgehäuse 36 ausgebildet ist, aus dem ein Teil der Leiterplatte 32 als Einschubfinger herausragt. Zur Montage wird das Einschubmodul 34 gemäß der Pfeilrichtung 40 mit dem Einschubfinger in das Getriebegehäuse 18 eingeführt und mittels Rastelementen 42 fest mit dem Getriebegehäuse 18 verbunden. Zur exakten räumlichen Positionierung wird die Leiterplatte 32 mittels Führungen 44 während des Einschiebens geführt und in montiertem Zustand fixiert. Im Ausführungsbeispiel sind die Führungen 44 als Anschläge 68, 76, 77,82, 83 im Getriebegehäuse 18 und an einem axial zur Ankerwelle 16 montierten ringförmigen Bürstenhalter 48 angeformt. Je nach Ausführung der Antriebsvorrichtung 10 können die Grenzen zwischen den einzelnen Gehäuseteilen auch unterschiedlich ausgebildet sein, so dass beispielsweise der Ringmagnet 28 auch im Bereich eines verlängerten Polgehäuses 14 oder eines separaten Zwischenstücks 50 - das beispielsweise im Wesentlichen durch den Bürstenhalter 48 gebildet wird - zwischen Getriebegehäuse 18 und Polgehäuse 14 angeordnet sein. Die Führungen 44 sind beispielsweise einstückig mit den entsprechenden Gehäuseteilen 18, 14, 50, 48 vorzugsweise mittels Spritzgußverfahrens ausgebildet. Ein Teil der Führungen 44 ist als Nut 52 in einer Gehäusewand ausgebildet. In Fig. 1b und 1d ist am Elektronikgehäuse 36 ein Steg 60 angeformt, der die selbe Breite 62 aufweist, wie die Leiterplatte 32 und mittels einer Clips-Verbindung 64 mit derselben verbunden ist. Die Hallsensoren 30 sind sehr flachbauend in SMD-Technik auf der Leiterplatte 32 angebracht, so dass die Leiterplatte 32 in geringem Abstand 66 zur Ankerwelle 16, tangential zum Ringmagneten 28 positioniert wird. Fig. 2a zeigt einen Schnitt durch die eingeschobene Leiterplatte 32 des Einschubmoduls 34 aus Fig. 1b. Die Leiterplatte 32 liegt mit ihrer dem Ringmagnet 28 zugewandten Seite 70 in axial vom Elektromotor 12 abgewandten Bereich 72 an einem Anschlag 68 des Getriebegehäuses 18 an, der den minimalen Abstand der Leiterplatte 32 zum Ringmagneten 28 bestimmt. Die als Steg 60 ausgeformte Führung 44 liegt an der Leiterplatte 32 an deren vom Ringmagneten 28 abgewandten Seite 74 an und preßt die Leiterplatte 32 gegen den Anschlag 68. Mit der anderen Seite stützt sich der Steg 60 am Getriebegehäuse 18 ab und bildet damit einen Anschlag für die Leiterplatte 32, der einem maximalen Abstand der Leiterplatte 32 zum Ringmagneten 28 entspricht.

Fig. 1c zeigt ein weiteres Einschubmodul 34, dessen Elektronikgehäuse 36 im Wesentlichen gleich ausgeformt ist, wie das von Fig. 1b. Das Einschubmodul 34 ist jedoch mit einer unterschiedlichen Leiterplatte 32 bestückt, die auf ihrem aus dem Elektronikgehäuse 36 ragenden Bereich eine größere Breite 62 aufweist, um beispielsweise einen ASIC-Baustein 80 aufzunehmen. Der ASIC-Baustein 80 enthält einen kompletten Mikroprozessor für eine Steuerelektronik und ist so auf der Leiterplatte 32 positioniert, dass die in den ASIC 80 integrierten Hallsensoren 30 in eingeschobenem Zustand direkt gegenüber dem Ringmagneten 28 positioniert sind. Durch die größere Bauhöhe des ASIC's 80 ist der Abstand 66 zwischen Leiterplatte 32 und Ankerwelle 16 größer als bei den SMD-Hallsensoren 30, wie in Abbildung Fig. 2b zu sehen ist. Der Anschlag 68 für die Leiterplatte 32 mit den SMD-Hallsensoren 30 bleibt bei dieser Anordnung ungenutzt, die breitere Leiterplatte 32 mit dem ASIC 80 wird hingegen in ihrem Abstand zum Ringmagnet 28 durch zwei Anschläge 76 und 77 am Getriebegehäuse 18 oder Bürstenhalter 48 räumlich fixiert. Die Leiterplatte 32 liegt hierbei mit ihrem axial dem Elektromotor 12 zugewandten Bereich 78 an ihren dem Ringmagnet 28 zugewandten Seite 70 an dem Anschlag 76 zur Festlegung des minimalen Abstands 66 an, und wird durch den Anschlag 77, der an der dem Ringmagneten 28 abgewandten Seite 74 anliegt, gegen den Anschlag 76 gepreßt. Dabei übernimmt der Anschlag 77 die Funktion des Stegs 60 bei der schmaleren Leiterplatte 32. Daher weist das Einschubmodul 34 bei der breiten Leiterplatte 32 mit dem ASIC 80 keinen Steg 60 auf. Hingegen sind die Anschläge 76 und 77 bei dem Einschubmodul 34 mit der schmalen Leiterplatte 32 in Fig. 2a ohne Funktion.

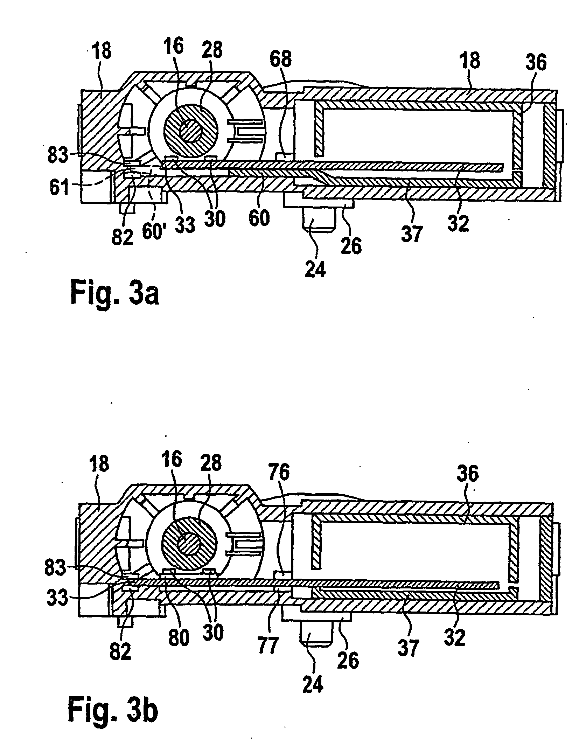

Fig. 3a zeigt einen Schnitt bei montiertem Einschubmodul 34 mit schmaler Leiterplatte 32 entsprechend Fig. 2a. Die Leiterplatte 32 ragt hierbei gerade aus dem Elektronikgehäuse 36 in das Getriebegehäuse 18, wobei die Leiterplatte 32 parallel zur Ankerwelle 16, bzw. tangential zum Ringmagnet 28 angeordnet ist. Der Anschlag 68 auf der dem Elektromotor 12 abgewandten Seite der Leiterplatte 32 gibt den minimalen Abstand zur Ankerwelle 16 vor, der Steg 60, der hier einstückig mit dem Elektronikgehäuse 16 ausgebildet ist, preßt die Leiterplatte 32 gegen den Anschlag 68, wobei sich der Steg 60 an der Wand des Getriebegehäuses 18 abstützt. Das Getriebegehäuse 36 weist hierbei einen Deckel 37 auf, mit dem der Steg 60 näherungsweise in einer Ebene angeordnet ist. Aufgrund des geringen Bauraums der SMD-Hallsensoren 30 erstreckt sich die Leiterplatte 32 nicht bis zu den Anschlägen 82, 83 bzw. der Nut 52, die im Bereich des freien Endes 33 der Leiterplatte 32 am Getriebegehäuse 18 angeordnet sind.

In Fig. 3b ist entsprechend ein Schnitt durch die breite Leiterplatte 32 mit dem ASIC 80 dargestellt. Diese Leiterplatte 32 wird durch die beiden Anschläge 76, 77, die die Leiterplatte 32 an dem dem Elektromotor 12 zugewandten Bereich führen, räumlich fixiert. Der Deckel 37 des Getriebegehäuses 36 weist daher keinen Steg 60 auf. Die Leiterplatte 32 erstreckt sich über den Ringmagneten 28 hinaus und wird hier zusätzlich an ihrem freien Ende 33 durch die beiden Anschläge 82 und 83 geführt. Die beiden Anschläge 82, 83 können alternativ auch als Nut 52 im Getriebegehäuse in axialer Richtung angeformt sein, die das freie Ende 33 der Leiterplatte 32 über deren gesamte Breite aufnimmt. Durch die zusätzliche Fixierung der Leiterplatte 32 an ihrem freien Ende 33 wird verhindert, dass sich der Abstand zwischen den Hallsensoren 30 und dem Ringmagnet 28 beispielsweise durch äußere Erschütterungen verändert.

In einem alternativen Ausführungsbeispiel ist beim Einschubmodul 34 mit der schmalen Leiterplatte 32 der Steg 60 länger ausgebildet als das freie Ende 33 der Leiterplatte. Diese Verlängerung 60' des Stegs ermöglicht ebenfalls eine zusätzliche Fixierung an den Anschlägen 82 und 83 oder der Nut 52. Die Verlängerung 60' des Stegs 60 wird dabei so angeformt, dass dessen Ende 61 genau denselben Abstand 66 zur Ankerwelle 16 aufweist, wie die länger ausgebildete Leiterplatte in Fig. 3b. Dabei hat die Verlängerung 60' an deren Ende 61 dieselbe Dicke 86 wie die normierte Dicke 86 der beiden Leiterplatten 32. Somit wird auch die kürzere Leiterplatte 32 an ihrem freien Ende 33 durch die Verlängerung 60' zusätzlich fixiert, um einen gleichbleibenden Abstand 66 zwischen der Leiterplatte 32 und der Ankerwelle 16 zu gewährleisten.

In einem weiteren Ausführungsbeispiel ist das Einschubmodul 34 nicht mit einem separaten Elektronikgehäuse 36 ausgebildet, sondern wird komplett in das Getriebegehäuse 18 eingefügt, so dass beispielsweise eine Stirnseite des Einschubmoduls 34, gleichzeitig einen Deckel für das Getriebegehäuse 18 darstellt. Dabei ist die Leiterplatte 32 beispielsweise nicht L-förmig ausgeformt, wie in Fig. 1b oder 1c, sondern als ganzes in etwa rechteckig geformt, wobei eine Seite des Rechtecks der Breite 62 entspricht.

Die erfindungsgemäße Vorrichtung ist nicht auf die beiden beschriebenen Einschubmodule beschränkt, sonder beinhaltet eine beliebige Kombination von unterschiedlichen Einschubmodulen mit verschiedenen Leiterplatten 32 mit einem einzigen Getriebegehäuse. Dabei kann der Steg 60 auch als seperates Bauteil ausgebildet sein, das auf der Rückseite der Leiterplatte 32 befestigt, z. B. aufgeklebt oder angeclipst wird.

## Patentansprüche

1. Antriebsvorrichtung (10), insbesondere zum Heben und Senken von Scheiben im Kraftfahrzeug, mit einem eine Ankerwelle (16) aufweisenden Elektromotor (12), einer aus einem Elektronikgehäuse (36) ragenden Leiterplatte (32), einem Getriebegehäuse (18), und mehreren Führungen (44) zur räumlichen Fixierung der Leiterplatte (32) im Getriebegehäuse (18), **dadurch gekennzeichnet, dass** für unterschiedliche Leiterplatten (32) mit unterschiedlichen Breiten (62) und/oder Längen und/oder mit unterschiedlichen Abständen (66) zur Ankerwelle (16) unterschiedliche Führungen (44) mit der Leiterplatte (32) wechselwirken.

2. Antriebsvorrichtung (10) nach Anspruch 1, **dadurch gekennzeichnet, dass** zumindest ein Teil der Führungen (44) als Anschläge (44, 68, 76, 77, 82, 83, 52) am Getriebegehäuse (18) ausgebildet sind, an denen die Leiterplatte (32) mit ihrer der Ankerwelle (16) zu- oder abgewandten Seite (70, 74) zur Festlegung eines minimalen oder maximalen Abstands (66) zur Ankerwelle (16) anliegt.

3. Antriebsvorrichtung (10) nach einem der Ansprüche 1 oder 2, **dadurch gekennzeichnet, dass** zumindest ein Teil der Führungen (44) im Getriebegehäuse (18) so angeordnet sind, dass die Leiterplatte (32) an diesen Führungen (44) an ihren axial dem Elektromotor (12) zu- und/oder abgewandten Bereichen (78, 72) anliegt.

4. Antriebsvorrichtung (10) nach einem der Ansprüche 1 bis 3, **dadurch gekennzeichnet, dass** zumindest eine Führung (44, 60, 60') - insbesondere für eine Leiterplatte (32) mit geringer Breite (62) - als Steg (60, 60') ausgebildet ist, der mit der Leiterplatte (32) in das Getriebegehäuse (18) einschiebbar ist.

5. Antriebsvorrichtung (10) nach Anspruch 4, **dadurch gekennzeichnet, dass** der Steg (60, 60') am Elektronikgehäuse (36), insbesondere einstückig an dessen Deckel (37), angeformt ist,

6. Antriebsvorrichtung (10) nach einem der Ansprüche 4 oder 5, **dadurch gekennzeichnet, dass** die Leiterplatte (32) fest mit dem Steg (60, 60'), insbesondere mittels einer Clips-Verbindung (64), verbunden ist.

7. Antriebsvorrichtung (10) nach einem der Ansprüche 4 bis 6, **dadurch gekennzeichnet, dass** sich der Steg (60, 60') mit seiner der Leiterplatte (32) abgewandten Seite (58) am Getriebegehäuse (18) abstützt.

8. Antriebsvorrichtung (10) nach einem der Ansprüche 4 bis 7, **dadurch gekennzeichnet, dass** der Steg (60, 60') länger ausgebildet ist, als die Leiterplatte (32) und mit seinem freien Ende (61) an Führungen (44) anliegt, die als Anschläge (82, 83, 52) am Getriebegehäuse (18) angeordnet sind.

9. Antriebsvorrichtung (10) nach einem der vorhergehenden Ansprüche, **dadurch gekennzeichnet, dass** das Elektronikgehäuse (36) separierbar ausgebildet ist und - insbesondere mittels Rastelementen (42) - mit dem Getriebegehäuse (18) verbindbar ist.

10. Antriebsvorrichtung (10) nach einem der vorhergehenden Ansprüche, **dadurch gekennzeichnet, dass** axial zur Ankerwelle (16) ein Bürstenhalter (48) montierbar ist, an den insbesondere Führungen (44) für die Leiterplatte (32) angeformt sind.

11. Antriebsvorrichtung (10) nach einem der vorhergehenden Ansprüche, **dadurch gekennzeichnet, dass** die Führungen (44) zumindest teilweise als Nuten (52) ausgebildet sind.

12. Antriebsvorrichtung (10) nach einem der vorhergehenden Ansprüche, **dadurch gekennzeichnet, dass** mittels der Führungen (44) sowohl eine Leiterplatte (32) mit in einen ASIC (80) integrierten Hall-Sensoren (30), als auch eine direkt mit Hall-Sensoren (30) bestückte Leiterplatte (32) beidseitig fixierbar ist.

13. Antriebsvorrichtung (10) nach einem der vorhergehenden Ansprüche, **dadurch gekennzeichnet, dass** die Leiterplatte (32) parallel zur Ankerwelle (16), insbesondere tangential zu einem auf dieser befestigten Magneten (28), angeordnet ist.

14. Antriebsvorrichtung (10) nach einem der vorhergehenden Ansprüche, **dadurch gekennzeichnet, dass** die Ankerwelle (16) eine Schnecke (20) aufweist, die mit einem Schneckenrad (22) kämmt, auf dessen Achse (24) ein Abtriebsritzel (24) angeordnet ist.

## Claims

1. Drive device (10), in particular for lifting and lowering windows in motor vehicles, having an electric motor (12) which has an armature shaft (16), a printed circuit board (32) which protrudes out of an electronics housing (36), a gear mechanism casing (18), and a plurality of guides (44) for fixing the printed circuit board (32) in the gear mechanism casing (18) in three dimensions, **characterized in that** different guides (44) interact with the printed circuit board (32) for different printed circuit boards (32) of different widths (62) and/or lengths and/or which are at different distances (66) from the armature shaft (16).

2. Drive device (10) according to Claim 1, **characterized in that** at least some of the guides (44) are in the form of stops (44, 68, 76, 77, 82, 83, 52) on the gear mechanism casing (18), and that face (70, 74) of the printed circuit board (32) which faces or is averted from the armature shaft (16) rests against the said stops in order to establish a minimum or maximum distance (66) from the armature shaft (16).

3. Drive device (10) according to either of Claims 1 and 2, **characterized in that** at least some of the guides (44) are arranged in the gear mechanism casing (18) in such a way that those regions (78, 72) of the printed circuit board (32) which axially face and/or are averted from the electric motor (12) rest against these guides (44).

4. Drive device (10) according to one of Claims 1 to 3, **characterized in that** at least one guide (44, 60, 60') - in particular for a printed circuit board (32) of low width (62) - is in the form of a web (60, 60') which can be pushed into the gear mechanism casing (18) with the printed circuit board (32).

5. Drive device (10) according to Claim 4, **characterized in that** the web (60, 60') is formed on the electronics housing (36), in particular integrally formed on its cover (37).

6. Drive device (10) according to either of Claims 4 and 5, **characterized in that** the printed circuit board (32) is firmly connected to the web (60, 60'), in particular by means of a clip connection (64).

7. Drive device (10) according to one of Claims 4 to 6, **characterized in that** the web (60, 60') is supported against the gear mechanism casing (18) by its face (58) which is averted from the printed circuit board (32).

8. Drive device (10) according to one of Claims 4 to 7, **characterized in that** the web (60, 60') is longer than the printed circuit board (32) and its free end (61) rests against guides (44) which are arranged on the gear mechanism casing (18) in the form of stops (82, 83, 52).

9. Drive device (10) according to one of the preceding claims, **characterized in that** the electronics housing (36) can be separated and can be connected to the gear mechanism casing (18) - in particular by means of latching elements (42).

10. Drive device (10) according to one of the preceding claims, **characterized in that** a brush holder (48) can be fitted axially with respect to the armature shaft (16) and, in particular, guides (44) for the printed circuit board (32) are formed on the said brush holder.

11. Drive device (10) according to one of the preceding claims, **characterized in that** the guides (44) are at least partially in the form of grooves (52).

12. Drive device (10) according to one of the preceding claims, **characterized in that** both a printed circuit board (32) with Hall sensors (30) integrated in an ASIC (80) and a printed circuit board (32) populated directly by Hall sensors (30) can be fixed on both sides by means of the guides (44).

13. Drive device (10) according to one of the preceding claims, **characterized in that** the printed circuit board (32) is arranged parallel to the armature shaft (16), in particular tangentially to a magnet (28) secured to the latter.

14. Drive device (10) according to one of the preceding claims, **characterized in that** the armature shaft (16) has a worm (20) which meshes with a worm gear (22) which has an output pinion (26) arranged on its axle (24).

## Revendications

1. Dispositif de commande (10), notamment pour élever et abaisser des vitres dans un véhicule automobile, comprenant un moteur électrique (12) présentant un arbre d'induit (16), une carte de circuits imprimés (32) faisant saillie sur un boîtier électronique (36), un boîtier d'engrenage (18) et plusieurs guides (44) pour fixer dans l'espace la carte de circuits imprimés (32) à l'intérieur du boîtier d'engrenage (18),
**caractérisé en ce que**
pour différentes cartes de circuits imprimés (32) présentant des largeurs différentes (62) et/ou des longueurs différentes et/ou des distances différentes (66) par rapport à l'arbre d'induit (16), des guides différents (44) interagissent avec la carte de circuits imprimés (32).

2. Dispositif de commande (10) selon la revendication 1,
**caractérisé en ce qu'**
au moins certains des guides (44) sont formés sur le boîtier d'engrenage (18) comme des butées (44, 68, 76, 77, 82, 83, 52) en contact avec la carte de circuits imprimés (12) par son côté (70, 74) situé vers ou à l'opposé de l'arbre d'induit (16), pour fixer une distance (66) minimale ou maximale par rapport à l'arbre d'induit (16).

3. Dispositif de commande (10) selon la revendication 1 ou 2,
**caractérisé en ce qu'**
au moins une partie des guides (44) est disposée dans le boîtier d'engrenage (18) de manière que la carte de circuits imprimés (32) est en contact avec ces guides (44) le long de ses zones (78, 72) proches ou éloignées axialement du moteur électrique (12).

4. Dispositif de commande (10) selon une des revendications 1 à 3,
**caractérisé en ce qu'**
au moins un guide (44, 60, 60') - notamment pour une carte à circuits imprimés (32) présentant une largeur faible (62) - a la forme d'une barrette (60, 60') qui peut, avec la carte à circuits imprimés (32), être introduite par coulissement dans le boîtier d'engrenage (18).

5. Dispositif de commande (10) selon la revendication 4,
**caractérisé en ce que**
la barrette (60, 60') est réalisée par formage sur le boîtier électronique (36), notamment en ne faisant qu'une seule pièce avec le couvercle (37) de ce boîtier.

6. Dispositif de commande (10) selon la revendication 4 ou 5,
**caractérisé en ce que**
la carte à circuits imprimés (32) est solidaire de la barrette (60, 60'), notamment par l'intermédiaire d'une liaison clipsée (64).

7. Dispositif de commande (10) selon une des revendications 4 à 6,
**caractérisé en ce que**
la barrette (60, 60') s'appuie sur le boîtier d'engrenage (18) par sa face (58) éloignée de la carte à circuits imprimés (32).

8. Dispositif de commande (10) selon une des revendications 4 à 7,
**caractérisé en ce que**
la barrette (60, 60') est plus longue que la carte à circuits imprimés (32) et se trouve appliquée par son extrémité libre (61) sur des guides (44) constitués de butées (82, 83, 52) situées sur le boîtier d'engrenage (18).

9. Dispositif de commande (10) selon une des revendications précédentes,
**caractérisé en ce que**
le boîtier électronique (36) est configuré de manière à pouvoir être séparé du boîtier d'engrenage (18) et à lui être relié, notamment par des éléments d'arrêt (42).

10. Dispositif de commande (10) selon une des revendications précédentes,
**caractérisé en ce qu'**
axialement par rapport à l'arbre d'induit (16), peut être monté un porte-balais sur lequel sont moulés notamment des guides (44) pour la carte à circuits imprimés (32).

11. Dispositif de commande (10) selon une des revendications précédentes,
**caractérisé en ce que**
les guides (44) sont au moins en partie constitués par des rainures (52).

12. Dispositif de commande (10) selon une des revendications précédentes,
**caractérisé en ce que**
les guides (44) permettent de fixer des deux côtés, aussi bien une carte à circuits imprimés (42) équipée de capteurs (30) à effet Hall intégrés à un ASIC (80) qu'à une carte à circuits imprimés (32) équipée directement de capteurs (30) à effet Hall.

13. Dispositif de commande (10) selon une des revendications précédentes,
**caractérisé en ce que**
la carte à circuits imprimés (32) est montée parallèlement à l'arbre d'induit (16), et notamment tangentiellement par rapport à un aimant (28) fixé sur cet arbre.

14. Dispositif de commande (10) selon une des revendications précédentes,
**caractérisé en ce que**
l'arbre d'induit (16) présente une vis (20) qui engrène avec une roue tangente (22) portant sur son axe (24) un pignon de sortie (26).
